# EUROPÄISCHE PATENTSCHRIFT

(11) **EP 0 628 653 B1**
(45) Veröffentlichungstag und Bekanntmachung des Hinweises auf die Patenterteilung: **01.10.2003**
(21) Anmeldenummer: 94105560.0
(22) Anmeldetag: 11.04.1994
(51) Int. Cl.: D06F 39/08

(54) **Automatisch gesteuerte Waschmaschine**
Automatically controlled washing machine
Machine à laver commandée automatiquement

(30) Priorität: 07.06.1993 DE 4318898; 22.09.1993 DE 4332225
(43) Veröffentlichungstag der Anmeldung: 14.12.1994
(73) Patentinhaber: BSH Bosch und Siemens Hausgeräte GmbH, 81669 München (DE)
(72) Erfinder: Moschütz, Harald, Dipl.-Ing., D-14979 Grossbeeren (DE); Wiemer, Horst, Dipl.-Ing., D-10967 Berlin (DE); Bolduan, Edwin, Dipl.-Ing., D-13629 Berlin (DE)

(56) Entgegenhaltungen:
- EP-A- 0 182 364
- WO-A-85/03729

## Beschreibung

Die Erfindung geht aus von einem Verfahren zum Anpassen einer zum Waschen bzw. Spülen eines Wäschepostens ausreichenden Menge von in den Behandlungsraum geführten Wassers bei einer automatisch gesteuerten Waschmaschine mit einer Heizeinrichtung zum Heizen des Wassers außerhalb eines Wäschebehandlungsraumes, mit einem Laugenumwälzsystem, mittels dem aus dem Behandlungsraum am Boden Lauge abgeführt und oberhalb der im Behandlungsraum befindlichen Wäsche dem Behandlungsraum über eine Umwälzleitung wieder zugeführt wird, an der eine Sensoreinrichtung angebracht ist, die ein Ausgangssignal führt, wenn Lauge durch das Laugenumwälzsystem fließt, und mit mindestens einer Frischwasserzuleitung, die mittels eines von einer Steuereinrichtung steuerbaren Ventils bei Fehlen des Volumenstroms geöffnet oder bei vorhandenem Volumenstrom geschlossen werden kann.

Neben Waschmaschinen, in denen sich eine mit der zu behandelnden Wäsche gefüllte Waschtrommel in einem mit Waschlauge gefüllten Behälter dreht, sind auch solche Waschmaschinen bekannt (EP-B-182 364), die zur Benetzung der Wäsche zusätzlich über ein Laugenumwälzsystem verfügen. Damit wird die Absicht verfolgt, die sogenannte freie Flotte - das ist die nicht in der Wäsche gebundene Lauge - im Wäschebehandlungsraum möglichst auf Null zu verringern. Zwar enthält auch das Laugenumwälzsystem einen nennenswerten Anteil an freier Flotte; sein Volumen ist jedoch minimierbar.

Die zum Waschen bzw. zum Spülen benötigten Laugenmengen werden dabei mit Hilfe von an der Druckseite der Umwälzpumpe angeschlossenen Druckschaltern gesteuert. Da die Heizeinrichtung bei der bekannten Waschmaschine in einem besonderen Sammelbehälter für die Lauge unterhalb der Pumpe und in Strömungsrichtung vor ihr eingebaut ist, muß ein besonderer Druckschalter für die Überwachung eines zur Benetzung der Heizeinrichtung genügend hohen Niveaus vorhanden sein.

Da zur Reinigung der Wäsche an sich nur eine wirksame Durchflutung der Wäsche mittels Wasch- oder Spülflüssigkeit erforderlich ist, die durch ein Laugenumwälzsystem von oben auf die Wäsche gebracht wird, ist ein Laugenstand im Wäschebehandlungsraum überflüssig. Die unbedingt notwendige Laugenmenge besteht nämlich nur aus genügend Wasch- bzw. Spülflüssigkeit zum Umwälzen und Durchfluten der Wäsche in der Waschmaschine. Dieser Zustand ist dann erreicht, wenn die Wäsche entsprechend ihrem Saugvermögen Wasch- oder Spülflüssigkeit enthält und gerade noch soviel Flüssigkeit abtropfen läßt, daß das Umwälzsystem vollständig gefüllt ist und Wasch- oder Spülflüssigkeit auf ein Niveau oberhalb der Wäsche fördern kann. Dabei entsteht jedoch kein Laugenstand mehr im Wäschebehandlungsraum.

Der Erfindung liegt die Aufgabe zugrunde, die Wasserzufuhr in einer Waschmaschine so zu steuern, daß unter Inanspruchnahme der unbedingt nötigen Wassermenge möglichst auf jede überschüssige Wassermenge unter Aufbietung eines geringst möglichen Aufwandes an Bauteilen verzichtet werden kann.

Erfindungsgemäß wird diese Aufgabe durch die Merkmale der unabhängigen Ansprüche 1 und 2 gelöst.

Da eine Füllung des gesamten Laugenumwälzsystems erst erreicht ist, wenn in der Umwälzleitung eine Strömung vorhanden ist soll die Sensoreinrichtung nur für das Vorhandensein eines Volumenstromes linnerhalb glinnerhalb der Umwälzleitung sensibel sein. So wird durch eine Volumenstromsteuerung gerade nur soviel Lauge im Laugenbehälter gehalten, wie die Wäsche für das vollständige Benetzen benötigt. Zwar könnte das Öffnen des Ventils bei Fehlen des Volumenstroms zeitlich begrenzt sein und seine abermalige Öffnung erst wieder nach Ablauf einer Zeitverzögerung freigegeben werden, jedoch würden sich hierbei aus der Zeitverzögerung Ungenauigkeiten ergeben, die man mit der der Erfindung vermeiden kann.

Von Vorteil ist eine Weiterbildung der Erfindung, bei der ein mit einer Fahne gegen eine fiktive Strömung in der Umwälzleitung gerichteter Paddelschalter verwendet wird. Ein solcher Schalter kann auf einfache Weise mit geringen Hysterese-Toleranzen ausgestattet sein.

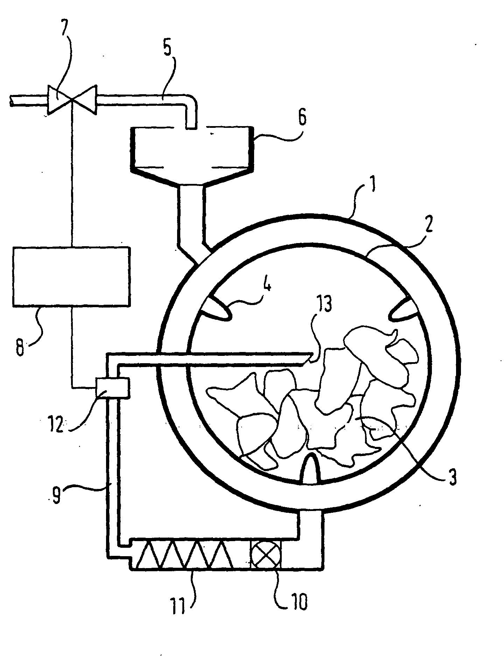

Anhand eines in der Zeichnung dargestellten Ausführungsbeispiels ist die Erfindung nachstehend erläutert.

Die Zeichnung zeigt in schematischer Darstellung eine Waschmaschine mit einem Laugenbehälter 1 als Wäschebehandlungsraum, in dem eine Waschtrommel 2 drehbar horizontal gelagert ist. In ihr liegend sind Wäschestücke 3 angedeutet, die durch Mitnehmer 4 beim Drehen der Trommel angehoben werden und wieder herabfallen. Dadurch findet ein ständiges Umschichten der Wäscheteile statt, wodurch sie stets in neuen Richtungen - immer in Schwerkraft-Richtung- von Wasch- oder Spüllauge durchflutet werden: Die Wasch- oder Spüllauge wird über eine Frischwasserleitung 5 und einen Waschmittelbehälter 6 in den Wäschebehandlungsraum 1 eingeführt. Zum Steuern der Frischwasserzufuhr dient ein Ventil 7 in der Frischwasserleitung 5. Das Ventil 7 wird zu diesem Zweck von der Steuereinrichtung 8 der Waschmaschine gesteuert.

Zum ständigen Durchfluten der Wäsche 3 mittels Wasch- oder Spüllauge ist am Boden des Laugenbehälters 1 ein Laugenumwälzsystem angeschlossen, bestehend aus einer ringförmigen Leitung 9, in deren Zug eine Laugenpumpe 10, eine Heizeinrichtung 11 und eine Sensoreinrichtung 12 angeordnet sind.

Dabei ist die Heizeinrichtung 11 vorzugsweise auf der Druckseite der Pumpe 10 in der Umwälzleitung 9 angeordnet, damit schon bei Vorhandensein der geringsten Wassermenge, die zur Aufrechterhaltung eines Volumenstroms im Umwälzsystem 9 benötigt wird, der oder die Heizkörper 11 sicher mit Wasser bedeckt sind.

Gemäß den Ansprüchen gibt die Sensoreinrichtung 12 ein positives Signal dann ab, wenn das Laugenumwälzsystem vollständig gefüllt ist und sich vor der Zuführöffnung 13 ein Staudruck gebildet hat oder eine Strömung in der Leitung 9 festgestellt wird. Das ist dann der Fall, wenn die Wäsche entsprechend ihrem speziellen Saugvermögen (abhängig von der Wäscheart und -menge) mit Wasser vollgesogen ist und überschüssiges Wasser abtropfen kann, das vom Laugenumwälzsystem 9 aufgefangen, gepumpt, ggf. beheizt und von der Sensoreinrichtung 12 wahrgenommen wird. Solange die Sensoreinrichtung 12 eine Strömung der Lauge im Umwälzsystem wahrnimmt, bewirkt das positive Signal an die Steuereinrichtung 8 die ständige Sperrung des Ventils 7 und damit der Frischwasserzufuhr. Sollte aber - z.B. während der Benetzungsphase - die Wäsche aus der umgewälzten und über sie versprühten Lauge immer wieder noch gewisse Laugenmengen aufsaugen, so vermindert sich dadurch die im Umlauf gehaltene Laugenmenge bis die Sensoreinrichtung 12 keine Lauge bzw. keine Strömung mehr wahrnimmt. Dann gibt sie ein Negativsignal an die Steuereinrichtung 8 ab, die ihrerseits daraus ein Öffnungssignal an das Magnetventil 7 weiterleitet. Die Frischwasserzufuhr wird dadurch eingeschaltet und die fehlende Wassermenge ergänzt.

Besondere Vorteile gegenüber dem Stand der Technik ergeben sich für den Erfindungsgegenstand aus einer minimalen Wassermenge (es befindet sich kein ungenutztes Wasser im Laugenbehälter), aus einer sehr guten Anpassung der Wassermenge an das Saugvermögen des im Laugenbehälter befindlichen Wäschepostens (je nach Wäscheart und -menge) und aus der Verwendungsmöglichkeit einfachster Bauteile für eine nötige Sensoreinrichtung. In Verbindung mit der den Volumenstrom detektierenden Sensoreinrichtung 12 kann für die auf der Druckseite der Pumpe 10 im Umwälzsystem 9 angeordneten Heizeinrichtung 11 ein Trockengehschutz realisiert werden. Der Heizbetrieb kann nämlich in Abhängigkeit von der Erkennung der Lauge oder ihres Volumenstroms durch die Sensoreinrichtung 12 geschaltet werden.

## Patentansprüche

1. Verfahren zum Anpassen einer zum Waschen bzw. Spülen eines Wäschepostens ausreichenden Menge von in den Behandlungsraum geführten Wassers bei einer automatisch gesteuerten Waschmaschine mit einer Heizeinrichtung (11) zum Heizen des Wassers außerhalb eines Wäschebehandlungsraumes (1), mit einem Laugenumwälzsystem (9 bis 11), mittels dem aus dem Behandlungsraum (1) am Boden Lauge abgeführt und oberhalb der im Behandlungsraum befindlichen Wäsche dem Behandlungsraum über eine Umwälzleitung (9) wieder zugeführt wird, an der eine Sensoreinrichtung (12) angebracht ist, die ein Ausgangssignal führt, wenn Lauge durch das Laugenumwälzsystem fließt, und mit mindestens einer Frischwasserzuleitung, die mittels eines von einer Steuereinrichtung (8) steuerbaren Ventils (7) bei Fehlen des Volumenstroms geöffnet oder bei vorhandenem Votumenstrom geschlossen werden kann, **dadurch gekennzeichnet, dass** die Lauge in der Umwälzleitung (9) von der Druckseite der Pumpe (10) ausgehend zuerst die Heizeinrichtung (11) und dann die Sensoreinrichtung (12) passiert und dass die Sensoreinrichtung (12) den innerhalb der Umwälzleitung (9) vorhandenen Volumenstrom detektiert.

2. Waschmaschine zum Anpassen einer zum Waschen bzw. Spülen eines Wäschepostens ausreichenden Menge von in den Behandlungsraum geführten Wassers bei einer automatisch gesteuerten Waschmaschine mit einer Heizeinrichtung (11) zum Heizen des Wassers auβerhalb eines Wäschebehandlungsraumes (1), mit einem Laugenumwälzsystem (9 bis 11), mittels dem aus dem Behandlungsraum (1) am Boden Lauge abgeführt und oberhalb der im Behandlungsraum befindlichen Wäsche dem Behandlungsraum über eine Umwälzleitung (9) wieder zugeführt wird, an der eine Sensoreinrichtung (12) angebracht ist, die ein Ausgangssignal führt, wenn Lauge durch das Laugenumwälzsystem fließt, und mit mindestens einer Frischwasserzuleitung, die mittels eines von einer Steuereinrichtung (8) steuerbaren Ventils (7) bei Fehlen des Volumenstroms geöffnet oder bei vorhandenem Volumenstrom geschlossen werden kann, **dadurch gekennzeichnet, dass** die Lauge in der Umwälzteitung (9) von der Druckseite der Pumpe (10) ausgehend zuerst die Heizeinrichtung (11) und dann die Sensoreinrichtung (12) passiert und die Sensoreinrichtung (12) den innerhalb der Umwälzleitung (9) vorhandene Volumenstrom detektiert, und dass die Heizeinrichtung (11) unmittelbar an der Druckseite der Pumpe (10) angeschlossen und die Sensoreinrichtung (12) in einem Abschnitt der Umwälzleitung (9) angekoppelt ist, der zwischen der Heizeinrichtung (11) und der Zuführung (13) der Umwälzleitung (9) zum Behandlungsraum (1) liegt und dass die Sensoreinrichtung (12) zur unmittelbaren Detektierung eines Volumenstroms eingerichtet ist.

3. Waschmaschine nach Anspruch 2, **dadurch gekennzeichnet, dass** die Sensoreinrichtung (12) ein mit einer Fahne gegen eine fiktive Strömung in der Umwälzleitung (9) gerichteter Paddelschalter ist.

## Claims

1. Method for adapting a quantity of water, which is sufficient for washing or rinsing a laundry batch and which is conducted into the treatment chamber, in an automatically controlled washing machine with a heating device (11) for heating the water outside a laundry treatment chamber (1), a solution circulating system (9 to 11), by means of which solution is conducted out of the treatment chamber (1) at the base and is fed back to the treatment chamber, above the laundry disposed in the treatment chamber, by way of a circulation duct (9), at which is mounted a sensor device (12) which conducts an output signal when solution flows through the solution circulating system, and at least one fresh water feed duct which can be opened by means of a valve (7), which is controllable by a control device (8), in the case of deficiency in the volume flow or closed in the case of volume flow being present, **characterised in that** the solution in the circulation duct (9) passes, starting from the pressure side of the pump (10), initially the heating device (11) and then the sensor device (12) and that the sensor device (12) detects the volume flow present within the circulation duct (9).

2. Washing machine for adapting a quantity of water, which is sufficient for washing or rinsing a laundry batch and which is conducted into the treatment chamber, in an automatically controlled washing machine with a heating device (11) for heating the water outside a laundry treatment chamber (1), a solution circulating system (9 to 11), by means of which solution is conducted out of the treatment chamber (1) at the base and is fed back to the treatment chamber, above the laundry disposed in the treatment chamber, by way of a circulation duct (9), at which a sensor device (12) is mounted which conducts an output signal when solution flows through the solution circulating system, and at least one fresh water feed duct which can be opened by means of a valve (7), which is controllable by a control device (8), in the case of deficiency in the volume flow or closed in the case of volume flow being present, **characterised in that** the solution in the circulation duct (9) passes, starting from the pressure side of the pump (10), initially the heating device (11) and then the sensor device (12) and the sensor device (12) detects the volume flow present within the circulation duct (9) and that the heating device (11) is directly connected with the pressure side of the pump (10) and the sensor device (12) is coupled into a section of the circulation duct (9) which lies between the heating device (11) and the feed (13) of the circulation duct (9) to the treatment chamber (1) and that the sensor device (12) is equipped for direct detection of a volume flow.

3. Washing machine according to claim 2, **characterised in that** the sensor device (12) is a paddle switch with a vane directed against a notional flow in the circulation duct (9).

## Revendications

1. Procédé pour l'adaptation d'une quantité d'eau amenée dans l'espace de traitement et suffisante pour le lavage resp. pour le rinçage d'un lot de linge dans le cas d'une machine à laver commandée automatiquement, laquelle comprend un dispositif de chauffage (11) pour chauffer l'eau en dehors d'un espace de traitement du linge (1), un système de circulation de solution de lessive (9 à 11) permettant d'évacuer la solution de lessive au niveau du fond de l'espace de traitement (1) et de la ramener dans ledit espace de traitement par une conduite de circulation (9) qui l'amène au-dessus du linge se trouvant dans l'espace de traitement, un dispositif de détection (12) étant monté sur ladite conduite, lequel achemine un signal de sortie lorsque la solution de lessive coule dans le système de circulation de solution de lessive, et laquelle comprend au moins une conduite d'amenée d'eau fraîche, laquelle peut être ouverte au moyen d'une vanne (7) réglable par un dispositif de réglage (8) en l'absence de débit ou peut être fermée en présence d'un débit, **caractérisé en ce que**, partant du côté refoulement de la pompe (10), la solution de lessive qui se trouve dans la conduite de circulation (9) passe d'abord par le dispositif de chauffage (11) puis par le dispositif de détection (12) et **en ce que** le dispositif de détection (12) détecte la présence du débit dans la conduite de circulation (9).

2. Machine à laver pour l'adaptation d'une quantité d'eau amenée dans l'espace de traitement et suffisante pour le lavage resp. pour le rinçage d'un lot de linge dans le cas d'une machine à laver commandée automatiquement, laquelle comprend un dispositif de chauffage (11) pour chauffer l'eau en dehors d'un espace de traitement du linge (1), un système de circulation de solution de lessive (9 à 11) permettant d'évacuer la solution de lessive au niveau du fond de l'espace de traitement (1) et de la ramener dans ledit espace de traitement par une conduite de circulation (9) qui l'amène au-dessus du linge se trouvant dans l'espace de traitement, un dispositif de détection (12) étant monté sur ladite conduite, lequel achemine un signal de sortie lorsque la solution de lessive coule dans le système de circulation de solution de lessive, et laquelle comprend au moins une conduite d'amenée d'eau fraîche, laquelle peut être ouverte au moyen d'une vanne (7) réglable par un dispositif de réglage (8) en l'absence de débit ou peut être fermée en présence d'un débit, **caractérisé en ce que**, partant du côté refoulement de la pompe (10), la solution de lessive qui se trouve dans la conduite de circulation (9) passe d'abord par le dispositif de chauffage (11) puis par le dispositif de détection (12), **en ce que** le dispositif de détection (12) détecte la présence du débit dans la conduite de circulation (9), **en ce que** le dispositif de chauffage (11) est directement raccordé au côté refoulement de la pompe (10) et le dispositif de détection (12) est couplé dans une partie de la conduite de circulation (9) située entre le dispositif de chauffage (11) et la partie de la conduite de circulation (9) d'amenée (13) à l'espace de traitement (1) et **en ce que** le dispositif de détection (12) est aménagé de manière à détecter directement un débit.

3. Machine à laver selon la revendication 2, **caractérisée en ce que** le dispositif de détection (12) est un commutateur à ailettes avec une ailette, lequel est orienté à contre-courant d'un écoulement fictif dans la conduite de circulation (9).
